# EUROPEAN PATENT SPECIFICATION

(11) **EP 2 819 386 B1**
(45) Date of publication and mention of the grant of the patent: **30.08.2017**
(21) Application number: 12869337.1
(22) Date of filing: 07.05.2012
(51) Int. Cl.: H04M 1/02, H04N 5/225, H04N 13/02

(54) **MOBILE DEVICE**
MOBILE VORRICHTUNG
DISPOSITIF MOBILE

(30) Priority: 20.02.2012 CN 201220054618 U
(43) Date of publication of application: 31.12.2014
(73) Proprietor: ZTE Corporation, Shenzhen, Guangdong 518057 (CN)
(72) Inventor: LI, Xiaoli, Shenzhen Guangdong 518057 (CN)
(74) Representative: Novagraaf Technologies
(86) International application number: PCT/CN2012/075140
(87) International publication number: WO 2013/123725

(56) References cited:
- WO-A1-01/31893
- CN-A- 101 202 775
- CN-A- 101 872 211
- CN-U- 201 957 111
- US-A1- 2004 141 064
- US-A1- 2008 225 129
- US-A1- 2011 117 958
- US-A1- 2012 007 953

## Description

### Technical Field

The present invention relates to the field of communication devices, and specifically, to a mobile device.

### Background

The real world is three dimensional, and the world sensed by our eyes is also three dimensional and has rich appearance senses such as colour, lustre and material, ingenious and complex internal structures and spatio-temporal dynamics movement relationships. This three dimensional perception is accomplished cooperatively by the human eyes and human brain. However, with the development of science and technology, the record, transmission and representation of the real world sceneries experience several breakthroughs from black and white to colour, from motionless to motion, from analogue to digital and from standard definition to high definition, three dimensional films, and three dimensional televisions and three dimensional pictures have started to come to our sight.

The theory of naked eye three dimensional image display is different from that of two dimensional image display, and the acquisition of the three dimensional effect is dependent on the parallax of two eyes. Therefore, the photographing of three dimensional images on a mobile device generally needs dual lens cameras so as to simulate two eyes of a person to respectively acquire images corresponding to the left eye and right eye of a person. Obviously, the relative position of the two cameras when photographing should be in accordance with the relative position of the left eye and the right eye when watching, so that naked eyes can see the three dimensional images. The existing photographing mobile phones or cameras have become indispensable mobile devices in daily life and work, and using a mobile phone to watch films, watch TV and play games has already come true. From cinemas to televisions, it is a natural development tendency for the three dimensional image technology to be eventually applied to mobile phones. In addition, the three dimensional image technology starts to enter the practical stage after more than a decade's research and reveals an accelerating development tendency.

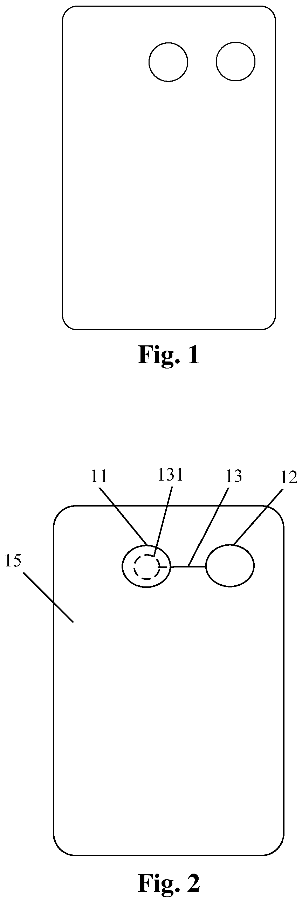

The two cameras on a photographing mobile phone are fixed at certain positions of the mobile phone. In a schematic diagram of the positions of the two cameras on the mobile phone as shown in Fig. 1, the relative position of the two cameras changes with the transversal photographing and vertical photographing of the mobile phone; as such, if a user wants to see the three dimensional images vertically photographed, he/she can only turn the head to the left or to the right by 90 degrees to see the three dimensional effect, which obviously is contrary to the usage habits.

With regard to the problem that two cameras on a mobile device can not photograph three dimensional images in the state of non-transversal photographing in related technologies, no effective solution is proposed at present.

"US2008/225129A1 discloses an electronic equipment and method in electronic equipment for forming image information and a program product for implementation of the method; US2012/007953A1 discloses a mobile terminal and 3D image controlling method therein; US2004/141064 discloses an information terminal device; US2011/117958A1 discloses a mobile terminal and controlling method thereof."

### Summary

The present invention provides a mobile device so as to at least solve the problem that two cameras on a mobile device can not photograph three dimensional images in the state of non-transversal photographing in related technologies.

According to one aspect of the present invention, a mobile device is provided. The mobile device includes: a fixed camera which is fixedly installed on a rear housing of the mobile device, and a movable camera which is connected to the fixed camera via a connection component, wherein a port at which the connection component is connected to the fixed camera is a component having a rotation function, wherein the mobile device further includes a sliding rail, wherein the fixed camera is positioned at an arc centre of the sliding rail, and the movable camera moves along the sliding rail via the connection component.

The sliding rail is arranged on the rear housing, and the sliding rail is set to be a hollow rail; the movable camera is connected with a clamping component, wherein the clamping component is clamped on the sliding rail, and the clamping component is able to move along the sliding rail.

The mobile device further includes an elastic circuit and a main board, wherein the movable camera is connected to the main board via the elastic circuit.

The mobile device further includes an indication module which is arranged on the main board, wherein the indication module is connected to the connection component and is configured to control, after receiving an adjustment instruction of the mobile device input by the user, the movements of the connection component according to the adjustment instruction.

The connection component is a telescopic connection component.

According to the present invention, one of the two cameras on the mobile device is set to be a movable camera, and the two cameras are connected via a connection component to enable the position of the movable camera to be adjustable, so that the relative position of the two cameras can be adjusted, and the problem that two cameras on some mobile devices can not photograph three dimensional images in the state of non-transversal photographing in related technologies is solved, thus the relative position of the two cameras on a mobile device can change according to different photographing angles, thereby ensuring that the mobile device can photograph three dimensional images from any photographing angle, enhancing the availability of the mobile device and improving the user experience.

### Brief Description of the Drawings

Drawings, provided for further understanding of the present invention and forming a part of the specification, are used to explain the present invention together with embodiments of the present invention rather than to limit the present invention. In the drawings:
Fig. 1 is a schematic diagram of the positions of two cameras on a mobile phone according to related technologies;
Fig. 2 is a top view of a mobile device according to an embodiment of the present invention;
Fig. 3 is a specific top view of a mobile device according to an embodiment of the present invention;
Fig. 4 is a schematic diagram of the connection between the movable camera and the sliding rail according to an embodiment of the present invention;
Fig. 5 is a sectional drawing of a mobile device according to an embodiment of the present invention;
Fig. 6 is a schematic diagram of a mobile phone according to an embodiment of the present invention; and
Fig. 7 is a specific sectional drawing of a mobile device according to an embodiment of the present invention.

### Detailed Description of the Embodiments

The present invention is described below with reference to the accompanying drawings and in conjunction with the embodiments in detail. Note that, the embodiments of the present invention and the features of the embodiments can be combined with each other if there is no conflict.

When an existing mobile device (e.g., a 3D mobile phone which can photograph three dimensional images) wants to photograph three dimensional images, it needs to be ensured that the relative position of two cameras on the 3D mobile phone is consistent with the relative position of left and right eyes of the viewer. However, the positions of two cameras on the existing 3D mobile phone are both fixed, thus the 3D mobile phone can photograph three dimensional images only when photographing transversally, and when photographing vertically or photographing from other angles, the 3D mobile phone cannot photograph three dimensional images.

On the basis of the above, one embodiment of the present invention provides a mobile device. As shown in Fig.2, the mobile device includes two cameras, wherein one camera is a fixed camera 11 which is fixedly installed on a rear housing 15 of the mobile device, and the other camera is a movable camera 12 which is connected to the fixed camera 11 via a connection component 13; wherein the connection component 13 may be a telescopic connection component and, for example, may be set to be similar to the structure of a telescopic antenna, that is, the connection component 13 is made of multiple rods with different radii in the form of ring sleeves, with the multiple rods being ordered in sequence according to the size of the radii, thereby realizing ring sleeve. Thus, the fixed camera 11 and the movable camera 12 can move towards each other along the connection direction of the connection component 13 by adjusting the length of the connection component 13, so that the relative distance between the fixed camera 11 and the movable camera 12 is under control. The relative distance between the two cameras is adjusted to keep consistent with the relative distance between left and right eyes of the user, and the two cameras may focus on the same position, thereby adjusting the focal point after focusing and the distance of the scenery to be photographed. The structure of the connection component 13 is certainly not limited to this, as long as the connection component 13 can keep at a position corresponding to a certain length when the connection component 13 is adjusted to the length.

The port 131 at which the connection component 13 is connected to the fixed camera 11 is a component having a rotation function. In the top view of the mobile device as shown in Fig. 2, the connection component 13 may rotate around the fixed camera 11, wherein the rotation refers to rotation in the direction of a horizontal plane in parallel with the rear housing 15 of the mobile device. The relative position of the two cameras on the mobile device can change according to different photographing angles, thereby ensuring that the mobile device can photograph three dimensional images from whichever photographing angle, and the user can see three dimensional images with normal watching habits.

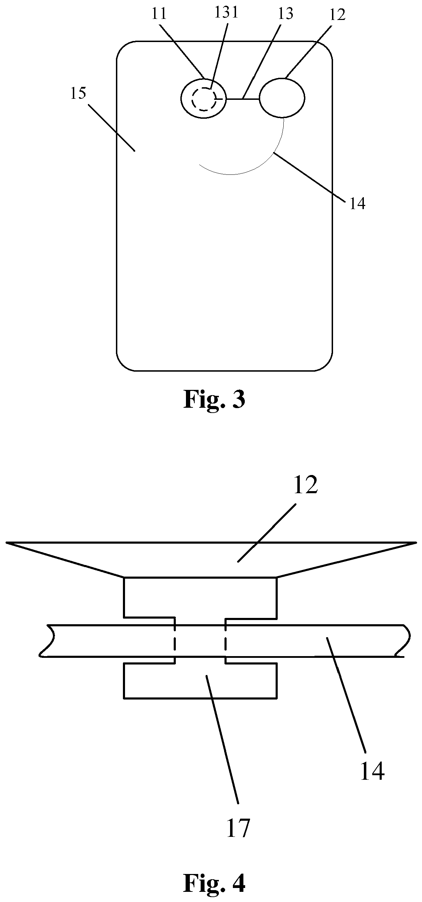

The movable camera 12 is able to move on the basis of the user's needs. The movable camera 12 in the present embodiment may have two movement modes, wherein the first mode is that the movable camera 12 suspends over the rear housing 15, then the movable camera 12 moves via the connection component 13; and the second mode is to arrange a sliding rail 14 on the mobile device. As shown in Fig. 3, the fixed camera 11 is positioned at the arc centre of the sliding rail 14, wherein the sliding rail 14 may be set to be a circle, a semicircle or a quarter of a circle, etc. Fig. 3 takes a sliding rail 14 of a quarter of a circle as an example for description, however, the shape of the sliding rail 14 is not limited to this, as long as the relative position between the movable camera 12 and the fixed camera 11 can keep consistent with the relative distance between left and right eyes of the user from any photographing angle. The movable camera 12 can move along the sliding rail 14 via the connection component 13. Thus, the mode to be adopted can be selected according to factors, such as the cost budget of the mobile device, and this implementation improves the flexibility of the selection of the sliding rail.

If the second mode is adopted, the sliding rail 14 may be arranged on the rear housing 15, and the sliding rail 14 may be set to be a hollow sliding rail. In the schematic diagram of the connection between the movable camera and the sliding rail as shown in Fig. 4, the movable camera 12 is connected with a clamping component 17, and the clamping component 17 is able to move along the sliding rail 14. The clamping component 17 may be set to be in the shape (1-shaped) as shown in Fig. 4, that is, being wide at two ends and narrow in the middle, thus, it is convenient for the clamping component to be clamped on the sliding rail 14. However, the shape of the clamping component 17 is not limited to this, as long as the clamping component 17 can be clamped on the sliding rail 14, thus the clamping component 17 can drive the movable camera 12 to move along the sliding rail 14.

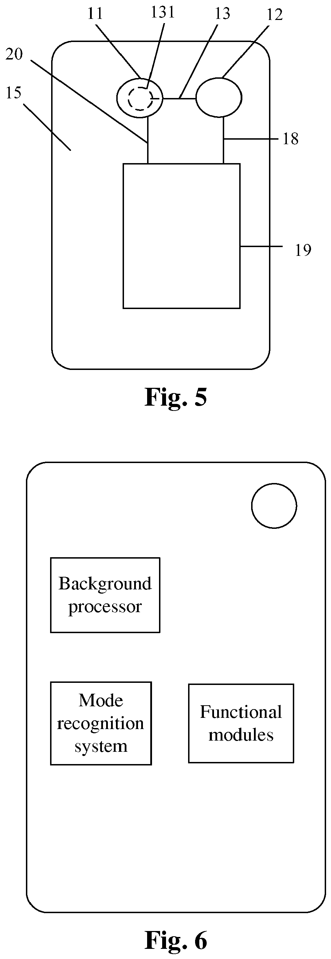

The description of the connection relationship between the fixed camera 11 and the movable camera 12 has been given previously. To realize the structure, the fixed camera 11 and the movable camera 12 need to have the photographing function all the time, and the fixed camera 11 can be set according to the following conventional methods. In the present embodiment, in order to enable the movable camera 12 to be in a moving state, the length of the connection line between the movable camera 12 and the main board may be long enough to realize the movement of the movable camera 12 within the movement range. As a preferred implementation, in the present embodiment, in order to keep the movable camera 12 in the moving state, the mobile device further includes an elastic circuit 18 and a main board 19. In the sectional drawing of the mobile device as shown in Fig. 5, the movable camera 12 is connected to the main board 19 being positioned inside the mobile device via the elastic circuit 18, the fixed camera 11 is connected to the main board 19 via the circuit 20, thus, a port transmitting camera control parameters between the processor of the mobile device and the movable camera 12 can be provided, thereby ensuring that the movable camera 12 has the photographing function all the time and ensuring the availability of the mobile device.

The mobile device may be a device such as a mobile phone, and a mobile phone is taken as an example for description as follows. Fig. 6 is a schematic diagram of a mobile phone according to the embodiment of the present invention. As shown in Fig. 6, a front camera is installed at the upper right of the mobile phone front face, and a background processor, a mode recognition system and functional modules normally implementing the calling and network functions of the mobile phone are included inside the mobile phone. The background processor, the mode recognition system and the functional modules may be arranged on the main board 19 (no description about this is given in Fig. 6), ensuring the connection with the movable camera 12. The front camera and the fixed camera 11 may use the front camera for photographing, however, images photographed in this way are two dimensional images, thereby achieving the purpose that the mobile device provided in the present embodiment can not only photograph two dimensional images, but also photograph three dimensional images.

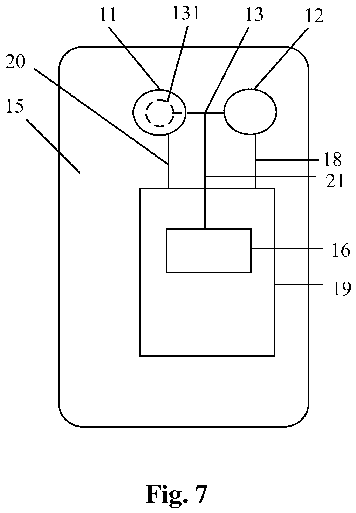

The movement of the movable camera 12 may be operated manually by the user, and may also be operated automatically via a functional module arranged inside the mobile device. On the basis of this, the mobile device further includes an indication module 16 arranged on the main board 19. As shown in Fig. 7, the indication module 16 is connected to the connection component 13 via a circuit 21 and is configured to control, after receiving an adjustment instruction of the mobile device input by the user, the movements of the connection component according to the adjustment instruction. Thus, the user may control the movement of the connection component 13 via a software button on a mobile device interface (e.g., a mobile phone interface), thereby achieving the movement of the movable camera 12.

It can be seen from the above description that the position of the two cameras on the mobile device provided in the present invention can change according to different photographing angles, so that the mobile device can achieve good three dimensional photographing effect, thereby enhancing the entertainment and availability of the mobile device and improving the user experience.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection as defined in the claims of the present invention.

## Claims

1. A mobile device, comprising:
a fixed camera (11) which is fixedly installed on a rear housing (15) of the mobile device;
a movable camera (12) which is connected to the fixed camera (11) via a connection component (13); and
wherein a port (131) at which the connection component (13) is connected to the fixed camera (11) is a component having a rotation function, **characterized in that** the mobile device further comprises a sliding rail (14) shaped as a circular arc forming a circle, semicircle or quarter-circle, wherein the fixed camera (11) is positioned at the centre of the circle, semicircle or quarter-circle of the circular arc formed by the shape of the sliding rail (14), and the movable camera (12) moves along the sliding rail (14) via the connection component (13).

2. The mobile device according to claim 1, **characterized in that**
the sliding rail (14) is arranged on the rear housing (15), and the sliding rail (14) is set to be a hollow sliding rail; and
the movable camera (12) is connected with a clamping component (17), the clamping component (17) is clamped on the sliding rail (14), and the clamping component (17) is able to move along the sliding rail (14).

3. The mobile device according to claim 1, **characterized in that**
the mobile device further comprises an elastic circuit (18) and a main board (19), and the movable camera (12) is connected to the main board (19) via the elastic circuit (18).

4. The mobile device according to claim 3, **characterized in that**
the mobile device further comprises an indication module (16) which is arranged on the main board (19); the indication module (16) is connected to the connection component (13) and is configured to control, after receiving an adjustment instruction of the mobile device input by a user, movements of the connection component (13) according to the adjustment instruction.

5. The mobile device according to any one of claims 1 to 4, **characterized in that**
the connection component (13) is a telescopic connection component.

## Patentansprüche

1. Mobile Vorrichtung, umfassend:
eine feste Kamera (11), die fest an einem hinteren Gehäuse (15) der mobilen Vorrichtung installiert ist;
eine bewegliche Kamera (12), die über ein Verbindungselement (13) mit der festen Kamera (11) verbunden ist; und
wobei ein Anschluss (131), an dem das Verbindungselement (13) mit der festen Kamera (11) verbunden ist, ein Element ist, das eine Drehfunktion besitzt, **dadurch gekennzeichnet, dass**
die mobile Vorrichtung weiter eine Gleitschiene (14) umfasst, die als ein Kreisbogen geformt ist, der einen Kreis, Halbkreis oder Viertelkreis bildet,
wobei die feste Kamera (11) im Zentrum des Kreises, Halbkreises oder Viertelkreises des Kreisbogens, der von der Form der Gleitschiene (14) gebildet wird, positioniert ist, und die bewegliche Kamera (12) sich über das Verbindungselement (13) der Gleitschiene (14) entlang bewegt.

2. Mobile Vorrichtung nach Anspruch 1, **dadurch gekennzeichnet, dass**
die Gleitschiene (14) an dem hinteren Gehäuse (15) angeordnet ist, und die Gleitschiene (14) als eine hohle Gleitschiene ausgelegt ist; und
die bewegliche Kamera (12) mit einem Klemmelement (17) verbunden ist, das Klemmelement (17) an die Gleitschiene (14) geklemmt ist, und das Klemmelement (17) in der Lage ist, sich entlang der Gleitschiene (14) zu bewegen.

3. Mobile Vorrichtung nach Anspruch 1, **dadurch gekennzeichnet, dass**
die mobile Vorrichtung weiter einen elastischen Schaltkreis (18) und eine Hauptplatine (19) umfasst, und die bewegliche Kamera (12) über den elastischen Schaltkreis (18) mit der Hauptplatine (19) verbunden ist.

4. Mobile Vorrichtung nach Anspruch 3, **dadurch gekennzeichnet, dass**
die mobile Vorrichtung weiter ein Angabemodul (16) umfasst, das auf der Hauptplatine (19) angeordnet ist; das Angabemodul (16) mit dem Verbindungselement (13) verbunden ist und dazu eingerichtet ist, nach Empfangen einer Anpassungsanweisung des Mobilgeräts, die von einem Benutzer eingegeben wurde, Bewegungen des Verbindungselements (13) entsprechend der Anpassungsanweisung zu steuern.

5. Mobile Vorrichtung nach einem der Ansprüche 1 bis 4, **dadurch gekennzeichnet, dass**
das Verbindungselement (13) ein teleskopisches Verbindungselement ist.

## Revendications

1. Dispositif mobile comprenant :
une caméra fixe (11) qui est installée de manière fixe sur un logement arrière (15) du dispositif mobile ;
une caméra mobile (12) qui est connectée à la caméra fixe (11) via un composant de connexion (13) ; et
dans lequel un port (131) au niveau duquel le composant de connexion (13) est connecté à la caméra fixe (11) est un composant ayant une fonction de rotation, **caractérisé en ce que**
le dispositif mobile comprend en outre un rail coulissant (14) en forme d'arc circulaire formant un cercle, demi-cercle ou quart de cercle,
dans lequel la caméra fixe (11) est positionnée au centre du cercle, demi-cercle ou quart de cercle de l'arc circulaire formé par la forme du rail coulissant (14), et la caméra mobile (12) se déplace le long du rail coulissant (14) via le composant de connexion (13).

2. Dispositif mobile selon la revendication 1, **caractérisé en ce que**
le rail coulissant (14) est agencé sur le logement arrière (15), et le rail coulissant (14) est défini comme étant un rail coulissant creux ; et
la caméra mobile (12) est connectée avec un composant de serrage (17), le composant de serrage (17) est serré sur le rail coulissant (14), et le composant de serrage (17) peut se déplacer le long du rail coulissant (14) .

3. Dispositif mobile selon la revendication 1, **caractérisé en ce que**
le dispositif mobile comprend en outre un circuit élastique (18) et une carte mère (19), et la caméra mobile (12) est connectée à la carte mère (19) via le circuit élastique (18).

4. Dispositif mobile selon la revendication 3, **caractérisé en ce que**
le dispositif mobile comprend en outre un module d'indication (16) qui est agencé sur la carte mère (19) ; le module d'indication (16) est connecté au composant de connexion (13) et est configuré pour commander, après réception d'une instruction de réglage du dispositif mobile saisie par un utilisateur, des mouvements du composant de connexion (13) selon l'instruction de réglage.

5. Dispositif mobile selon l'une quelconque des revendications 1 à 4, **caractérisé en ce que**
le composant de connexion (13) est un composant de connexion télescopique.
